Europäisches Patentamt

European Patent Office

Office européen des brevets

(11) Publication number: **0 165 211**
**A2**

## (12) EUROPEAN PATENT APPLICATION

(21) Application number: **85830108.8**

(22) Date of filing: **08.05.85**

(51) Int. Cl.⁴: **B 26 F 3/06**
**D 06 H 7/00, D 06 C 23/00**
**A 47 H 23/00**

(30) Priority: **17.05.84 IT 2097984**
**14.06.84 IT 2142484**
**01.08.84 IT 2216984**

(43) Date of publication of application:
**18.12.85 Bulletin 85/51**

(84) Designated Contracting States:
**AT BE CH DE FR GB LI NL SE**

(71) Applicant: **SILENT GLISS CASA S.r.l.**
**Via Pacinotti, 6**
**I-20090 Segrate (Milano)(IT)**

(72) Inventor: **Minder, Carlo F.**
**Via Pacinotti,6**
**I-20090 Segrate (Milano)(IT)**

(74) Representative: **Cicogna, Franco**
**Ufficio Internazionale Brevetti Dott.Prof. Franco Cicogna**
**Via Visconti di Modrone, 14/A**
**I-20122 Milano(IT)**

(54) A process for the production of fabric pieces for curtains or blinds.

(57) A process for the production of fabric pieces (2) for curtains or blinds, such as strip blinds, roman blinds, roller blinds and the like, which consists substantially in cutting lengths of fabric (2) of predetermined dimensions from a piece (1) of the fabric made of synthetic or mixed fibres. An important peculiarity of the invention is constituted by the fact that the cutting of each length of fabric (2) is effected with heated cutting means to obtain, simultaneously with the cutting, a heat fixing of the cut threads at least along the lines of the cut (3). Moreover, heat stabilization lines (4, 6, 4a, 6a) can also be effected, these being obtained by means of localised softening of the threads in the perimetral zones as well as in central portions of the fabric (2). Such heat stabilization lines (4, 6, 4a, 6a) can be of any form.

Fig.3

EP 0 165 211 A2

— 1 —

A Process for the Production of fabric pieces for
curtains or blinds

The present invention relates to a process for the
production of fabric pieces for curtains or blinds,
and particularly for strip blinds, roman blinds,
roller blinds and the like. The present invention
also relates to blinds or curtains obtained by the
process.

As is known, there are currently available on the
market various types of curtains or blinds which
are shaped in dependence on the particular type of
application: thus, for example, there are provided
strip blinds having vertical strips, as well as
roman blinds which have a length of fabric which is
suspended at its ends in such a way as to be taut
moreover, there are, for example, known roller blinds
which run vertically with respect to the window and
which can be rolled onto and unrolled from a suitable
roller which is arranged in the upper part of the
window.

- 2 -

In all the typical forms of a blind the fabric pieces are obtained by means of parallel cuts performed on pieces of fabric such that the edges of the lengths of fabric themselves are defined by weft and warp threads which are cut haphazardly.

The weft and warp threads consequently have no mutual connection and tend to unravel easily and it was therefore necessary to perform supplementary operations to stabilize the edge of the lengths of fabric to prevent this unravelling phenomenon.

One known arrangement consists in performing a plastics coating operation in correspondence with the edge; this operation obviously involves not insignificant additional costs, requiring the use of suitable machinery and specialized labour.

This finishing operation also has the disadvantage that it does not allow subsequent washing of the fabric, thus significantly detracting from the aesthetic aspect.

Moreover, in the case of traditional fabrics, it has not been possible to sew along the edges to obtain a sewn hem since this latter would have been extremely inconvenient and bulky because of the greater thickness, when using the fabric on a roller blind.

In a case where stitching was used on fabric pieces for roman blinds or the like, the greater thickness due to several layers of fabric superimposed on one

- 3 -

another created non uniformity on the fabric which was immediately obvious upon seeing the fabric against the light (back lighting), that is to say in the typical position of application to a window.

On the other hand, the plastics coating treatment conferred on the individual fabric lengths an artificial aspect and at the same time made them rather rigid and unpleasant to the touch, as well as unharmonious and inconsistent with the normal interior furnishings.

Another disadvantage which can be met with plastics coated fabrics was constituted by the fact that exposure to light, or when located in very sunny places, caused, in time, a variation in the colour of the plastics coated zones as well as a deformation due to the effect of the different temperature and expansion between the two faces.

Another disadvantage attributable to solutions adopted until now is constituted by the fact that all the currently adopted solutions require long working times which significantly affect the cost of the finished product.

The object of the present invention is to eliminate the previously indicated disadvantages making available a process for the production of lengths of fabric for strip blinds, roman blinds or roller blinds or the like which allows the cutting of the fabric into lengths of predetermined size to be effected

- 4 -

whilst immediately obtaining a fixing of the threads
at the edges of the fabric lengths without having
to arrange for supplementary working operations.

An important feature of the present invention is that
it provides a process by means of which the exterior
of the fabric may be left practically unmodified in
aspect whilst obtaining a high degree of finish.

Another feature of the present invention is that it
provides a process which will give the possibility
of obtaining lengths of fabric which can be washed,
spun dry, ironed, and in a wide range of colours
and designs without having any limitations in choice
on the part of the user. This is an important aspect
of the present invention in that it gives the possibility that the user can wash and iron blinds
formed in accordance with the present invention
easily and quickly, and in their own home without
requiring to have specialized equipment.

Another feature of the present invention is that of
providing a process which, because of its particular
characteristics, as well as obtaining a product of
high quality, also gives the possibility of drastically reducing the cost of the finished product.

A further feature of the present invention is that of
providing a process which will give the possibility

- 5 -

of obtaining blinds which are pleasant to the touch and which can easily be coordinated with the remaining furnishings in an environment, with the utilization of any type of fabric having synthetic or mixed fibres which have not previously been subjected to plastics coating treatments.

According to the present invention, therefore, there is provided a process for the production of lengths of fabric for strip, roman or roller blinds and the like, which consists in cutting lengths of fabric of predetermined dimensions from a piece of fabric made of synthetic or mixed fibres, characterised by the fact that the cutting of each length of fabric is effected by heated cutting means for obtaining, simultaneously with the cut, a heat fixing of the cut threads at least in the region of the line of cut.

Further characteristics and advantages of the invention will become apparent from the following description of a preferred, but not exclusive, embodiment of the process for the production of lengths of fabric for strip, roman, roller and like blinds, as well as blinds obtainable by the process, illustrated purely by way of indicative and not limitative example, and with the aid of the attached drawings, in which:

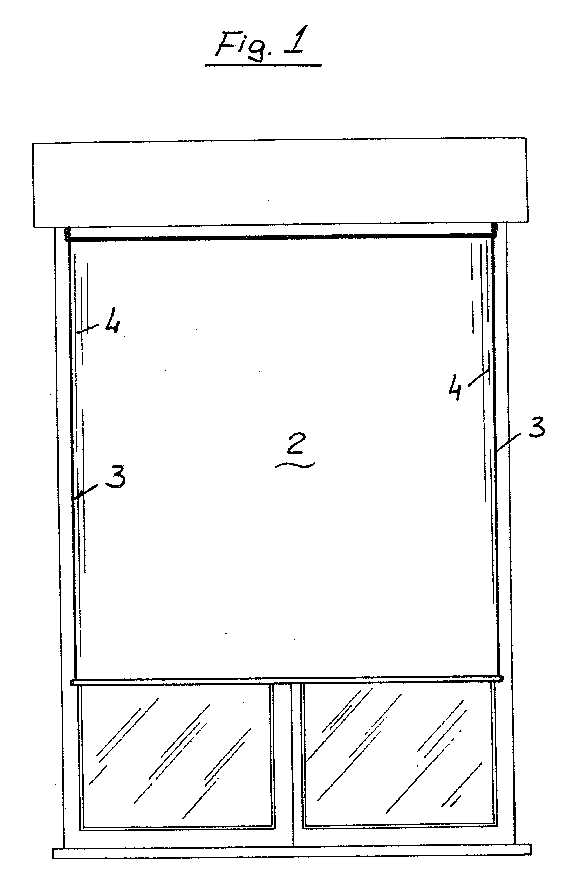

Figure 1 schematically illustrates a roller blind;

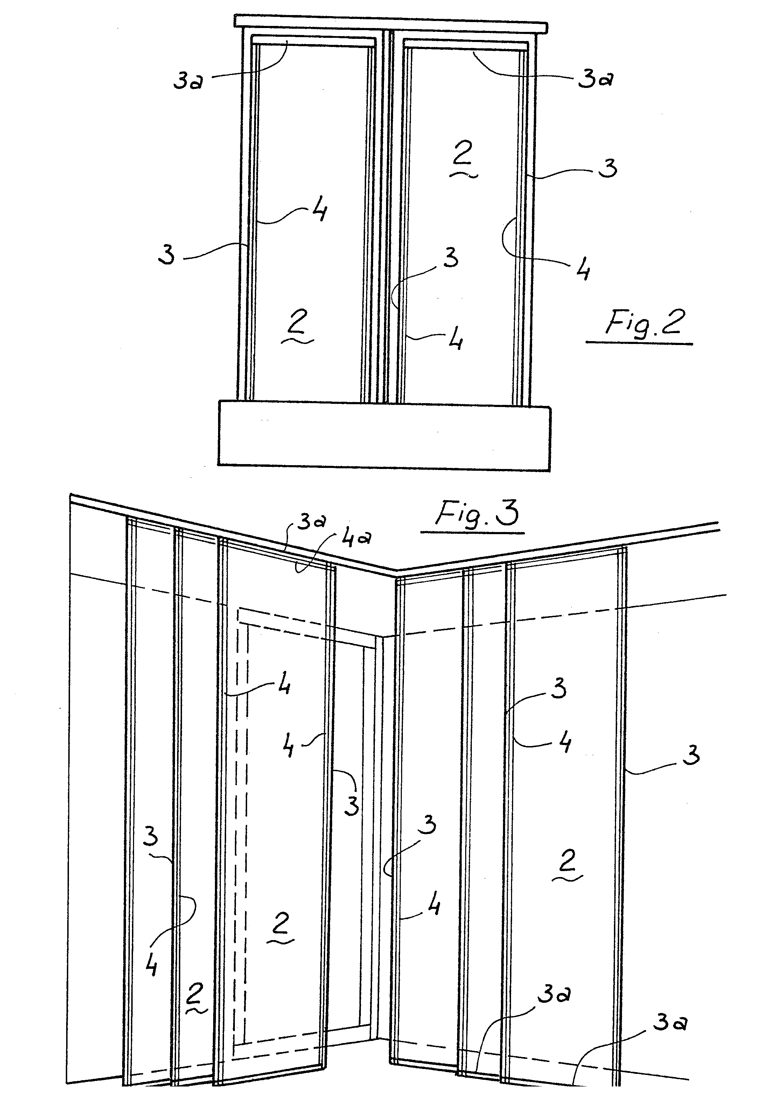

Figure 2 illustrates a window with a blind obtained by the process of the invention fitted thereto;

- 6 -

Figure 3 illustrates a roman blind viewed from the interior;

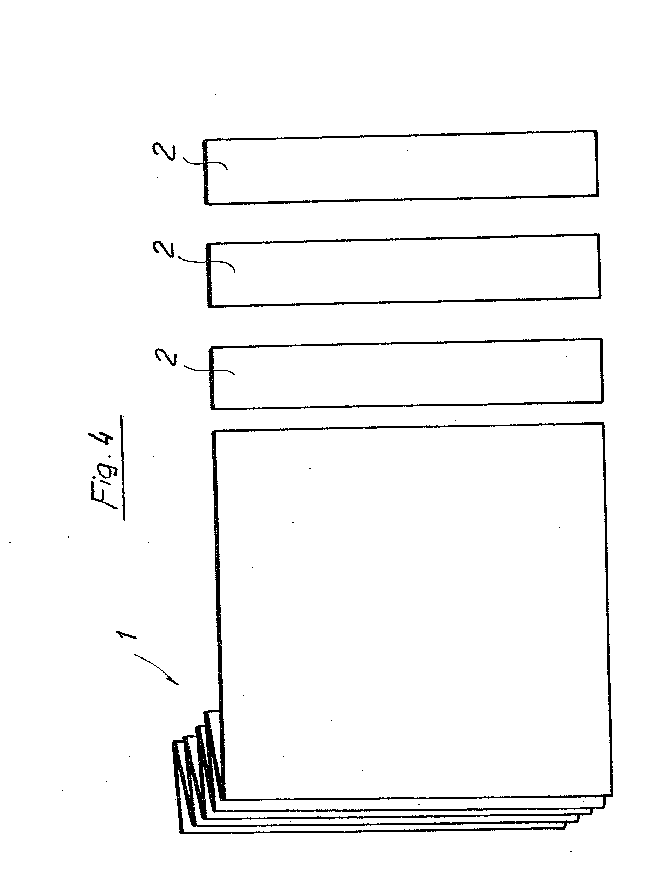

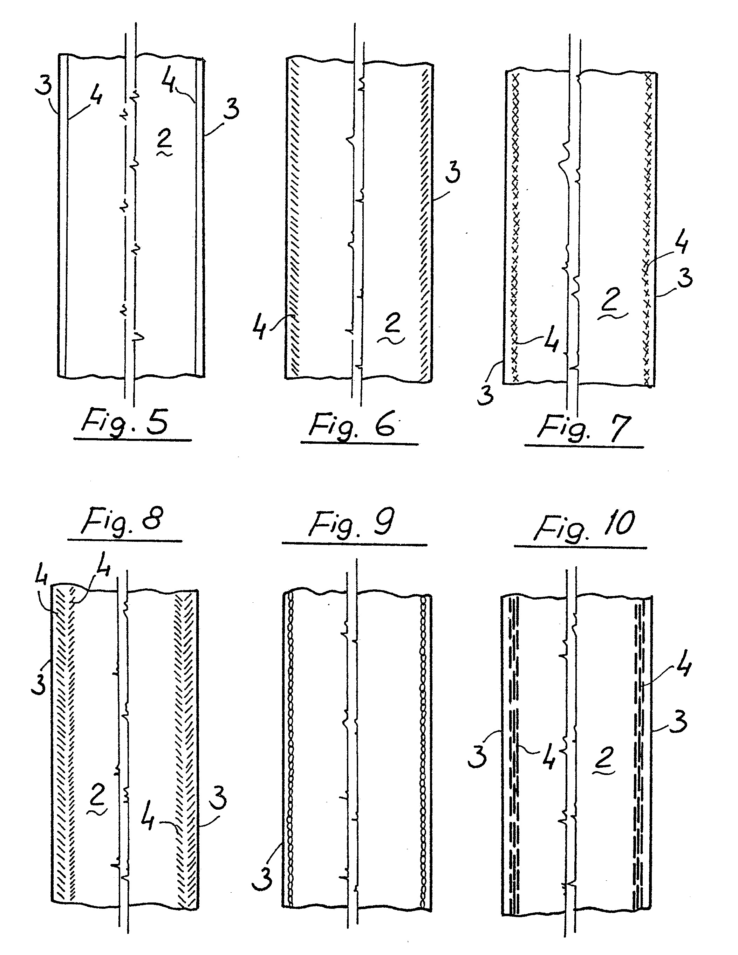

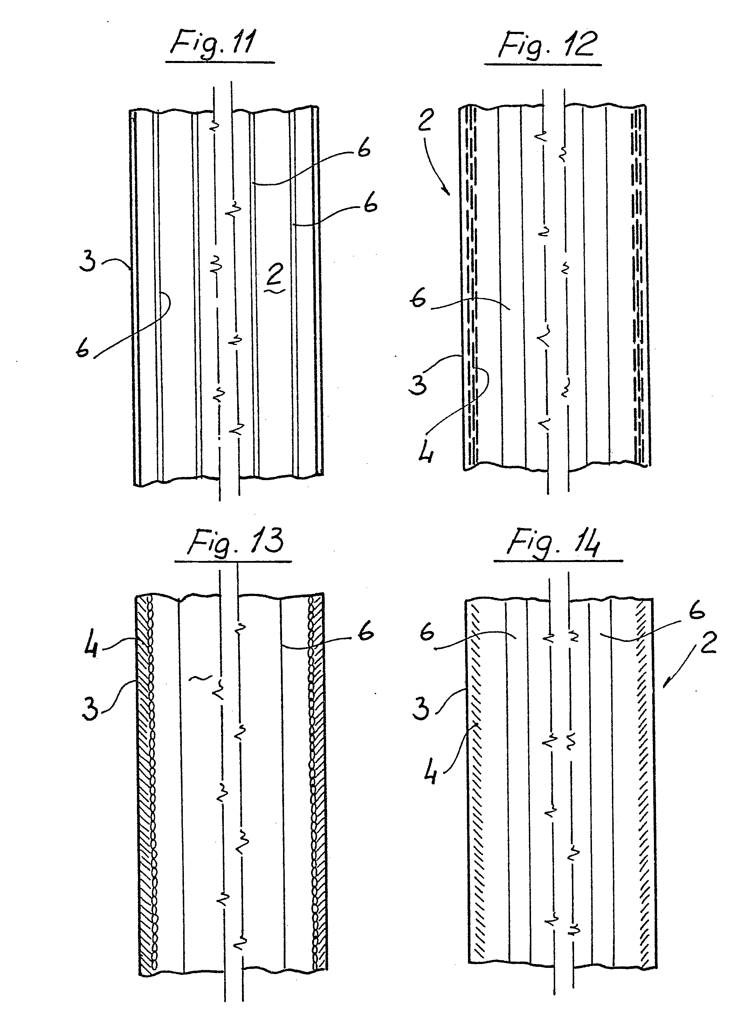

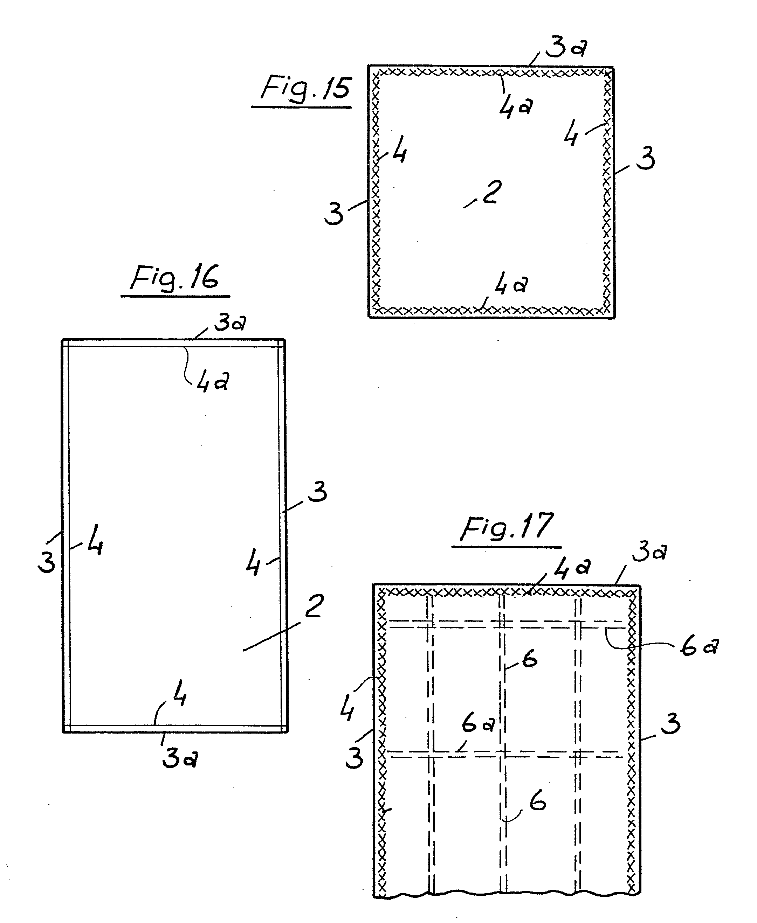

Figure 4 schematically illustrates lengths of fabric separated from a fabric piece;

Figures from 5 to 10 schematically illustrate lengths of fabric with zones of stabilization in correspondence with their longitudinal cut edges;

Figures from 11 to 14 schematically illustrate lengths of fabric with zones of stabilization also provided in central regions thereof;

Figures 15 and 16 illustrate lengths of fabric with strips of stabilization along both the longitudinal and transverse edges;

Figure 17 illustrates a length of fabric with strips or lines of stabilization provided both longitudinally and transversely.

With reference to the drawings, the process for the production of fabrics for strip blinds, roman blinds, roller blinds and the like consist substantially in cutting lengths of fabric generally indicated 2 from a piece of fabric 1.

The piece of fabric 1 is advantageously made from a flat textile structure which has synthetic or mixed fibres in the yarn.

The lengths of fabric 2 are cut into the predetermined dimensions by means of a blade, possibly also a disc, not illustrated in the attached drawings. An important particularity of the invention is constituted by the fact that the blade is heated such that given the particular type of fabric utilized, the blades
are able to effect, as well as cutting, a heat
softening along the cut edges with a consequent
mutual heat welding of the threads cut along the
longitudinal edges. There is thus obtained a line
of cut 3 which cannot be subject in any way to
unravelling.

For the purpose of reinforcing the stability of the
line of cut, the present process provides that,
alongside and in close proximity to the cutting
blade, there are provided heated presser means
constituted by discs, rollers or punches, which
create, close to the longitudinal cut edges, zones
or strips of stabilization, indicated 4, which allow
a perfect stability of the edges themselves to be
guaranteed even in the case of prolonged washing
operations.

In particular, it can be provided that the said
discs, rollers or the like, alongside the blade,
are provided with a knurled or milled edge, with
grooves parallel to or inclined with respect to the
axis of the rollers or discs themselves, or with
herringbone knurling or other conformation which is
considered suitable. In this case one will have,
close to the cut edges of the individual lengths of
fabric, lines or strips 4 of heat welding which
constitute a zone of stabilization.

Other solutions relating to the conformation and
particular shaping of the zones or strips of stabilization can however be adopted without any modification to the inspirational concept of the invention which is based on the principle of effecting a structural modification to the threads of which the zones involved in such stabilization are composed.

Obviously such treatment will be able to be extended also to wider portions of the fabric and even to the central portions, by forming central lines of stabilization (indicated 6) so as to obtain a stabilization of the textile of the length of fabric over the whole of its surface.

The heat welding and/or heat stabilization operations can be obtained by means of ultrasonic or laser ray apparatus or with other currently available techniques. Moreover, as will be apparent from Figure 15 to Figure 17 it is possible to effect stabilized lines of cut, indicated 3a, even in the transverse direction; similarly it is possible to provide both perimetral and central lines or zones of stabilization in transverse directions, which are indicated 4a and 6a in the attached drawings.

From what has been described above it will therefore be seen how the invention achieves the objects proposed and in particular the fact is to be underlined that, without modification to the characteristics of the exterior aspect of the fabric of the blind it is possible to obtain a precise and rapid stabilization both in the zone of cut and in any other suitable portion over the surface of the length of fabric from which the blind is to be formed.

The invention thus conceived may be susceptible to

- 9 -

numerous modifications and variations all within the scope of the inventive concept.

Moreover, all the details can be substituted by other technically equivalent elements.

In practice the materials used, as long as they are compatible with the specific use, as well as the dimensions and the contingent forms can be any suitable to requirements.

- 10 -

Claims:

1. A process for the production of lengths of fabric for strip blinds, roman blinds, roller blinds and the like which consists in cutting a length of fabric (2) of predetermined dimensions from a piece (1) of textile of synthetic or mixed fibres, characterised by the fact that the cutting of each length of fabric (2) is effected with heated cutting means to obtain, simultaneously with the cutting, a heat fixing of the cut threads at least along the line of cut (3).

2. A process according to Claim 1, characterised by the fact that it comprises effecting, simultaneously with the cut (3), at least in proximity with the line of cut (3), lines or strips of stabilization (4) obtained by means of heat welding elements disposed in proximity with the cutting blade for effecting the said line of cut (3).

3. A process according to Claim 1 or Claim 2, characterised by the fact that the said lines (4) of stabilization have grooves formed in any way.

4. A process according to any of the preceding Claims, characterised by the fact that at least one line (6) of stabilization is formed in a central portion of the length of fabric.

5. A process according to one or more of

- 11 -

the preceding Claims, characterised by the fact that it comprises effecting a heat fixed line of cut (3a) in a direction transversely with respect to the cut edge (3) of the said length of fabric (2).

6. A process according to one or more of the preceding Claims, characterised by the fact that the said lines of heat stabilization (4,6) are broken lines.

7. A process according to any preceding Claim, characterised by the fact that the said heat stabilization lines (4,6) are obtained by means of the use of laser rays, ultrasonic beams or heat welding elements.

8. A process according to any preceding Claim, characterised by the fact that it consists in forming a plurality of heat fixing lines (4, 6, 4a, 6a) distributed over the surface of the fabric.

9. A length of fabric for a strip blind, a roller blind, a roman blind or the like characterised by the fact that it comprises a body (2) made of a textile having synthetic or mixed fibres, at least one of the longitudinal edges thereof being provided with a line of cut (3) effected with localised heating for heat fixing of the cut fibres.

10.    A length of fabric according to the preceding Claim, characterised by the fact that it comprises, at least along the perimetral edges (3), zones or strips of heat stabilization (4) obtained by localized softening of the threads.

## Fig. 1

0165211

Fig.2

Fig.3

Fig. 4

0165211

4/6

Fig. 5

Fig. 6

Fig. 7

Fig. 8

Fig. 9

Fig. 10

Fig. 11

Fig. 12

Fig. 13

Fig. 14

_Fig.15_

3a
4a
4
4
3
3
2
4a
4a

_Fig.16_

3a
4a
3
4
3
4
2
4
3a

_Fig.17_

4a
3a
4
6a
6
4
6a
3
3
6